# EUROPÄISCHE PATENTSCHRIFT

(11) **EP 3 425 264 B1**
(45) Veröffentlichungstag und Bekanntmachung des Hinweises auf die Patenterteilung: **01.04.2020**
(21) Anmeldenummer: 18181627.3
(22) Anmeldetag: 04.07.2018
(51) Int. Cl.: F21S 8/06, F21V 21/03, F16B 13/08, F21V 23/00

(54) **AUFHÄNGEVORRICHTUNG ZUR DECKENBEFESTIGUNG EINER HÄNGELEUCHTE**
SUSPENSION DEVICE FOR A CEILING FITTING OF A HANGING LIGHT FIXTURE
DISPOSITIF DE SUSPENSION DESTINÉ À LA FIXATION AU PLAFOND D'UN LUMINAIRE SUSPENDU

(30) Priorität: 04.07.2017 DE 202017103973 U
(43) Veröffentlichungstag der Anmeldung: 09.01.2019
(73) Patentinhaber: Seltmann, Christian, 10711 Berlin (DE)
(72) Erfinder: Seltmann, Christian, 10711 Berlin (DE)
(74) Vertreter: Wagner Albiger & Partner Patentanwälte mbB

(56) Entgegenhaltungen:
- WO-A1-2016/071836
- CH-A- 228 765
- DE-A1- 1 930 994
- DE-U- 6 934 131
- FR-A- 707 321
- US-A- 2 632 620

## Beschreibung

Die vorliegende Erfindung betrifft eine Aufhängevorrichtung zur Deckenbefestigung einer Hängeleuchte an einem vor einem Hohlraum angeordneten Deckenelement.

Aus der EP 0 284 740 B1 ist eine Aufhängevorrichtung für eine Hängeleuchte bekannt, die sowohl für eine Hakenaufhängung als auch für eine direkte starre Deckenbefestigung der Leuchte geeignet ist und dazu einen Aufhängebügel aufweist, der an einem Deckenhaken aufgehängt werden kann und der von einer Schutzkappe überdeckt ist.

Die US 2,632,620 A und die WO 2016/071836 offenbaren ebenfalls Aufhängevorrichtungen für Leuchten, die mittels Federn aufspreizbare Dübel zur Verankerung hinter einer Zwischendecke aufweisen. DE1930994A, offenbart ebenfalls ein Aufhängevorrichtung für eine Leuchte.

Bei der Deckenbefestigung von Hängeleuchten stellt sich häufig das Problem, wie die Aufhängung gleichzeitig sicher und ästhetisch gestaltet werden kann. Häufig werden Baldachine eingesetzt, um die Aufhängevorrichtung selbst zu verdecken.

Es ist eine Aufgabe der vorliegenden Erfindung, eine Aufhängevorrichtung zur Deckenbefestigung einer Hängeleuchte anzugeben, die eine technisch einfache, leicht zu handhabende und gleichzeitig ästhetische Deckenbefestigung einer Hängeleuchte an einem vor einem Hohlraum angeordneten Deckenelement ermöglicht. Zudem soll die Deckenbefestigung gut wartbar und bei Bedarf justierbar bzw. entfernbar sein.

Diese Aufgabe wird gelöst mit dem Gegenstand des unabhängigen Schutzanspruchs. Vorteilhafte Ausgestaltungen und Weiterbildungen sind Gegenstand der Unteransprüche.

Gemäß einem Aspekt der Erfindung weist eine Aufhängevorrichtung zur Deckenbefestigung einer Hängeleuchte an einem vor einem Hohlraum angeordneten Deckenelement eine Gewindestange mit einem Außengewinde auf, die durch eine Öffnung in dem Deckenelement führbar ist, wobei die Gewindestange zur Aufnahme eines Kabels der Hängeleuchte hohl ausgebildet ist. Ferner weist die Aufhängevorrichtung einen Kippbalken mit einer Balkenlängsachse und einer quer zur Balkenlängsachse verlaufenden Ausnehmung auf. Ferner weist die Aufhängevorrichtung einen Gewindeeinsatz mit einer Durchgangsöffnung mit einem Innengewinde auf, wobei der Gewindeeinsatz zur Aufnahme der Gewindestange ausgebildet ist und derart in die Ausnehmung des Kippbalkens eingesetzt ist, dass der Kippbalken um eine Symmetrieachse des Gewindeeinsatzes schwenkbar ist.

Gemäß diesem Aspekt nutzt die Aufhängevorrichtung den Mechanismus eines Kippdübels zur Verankerung in dem hinter dem Deckenelement angeordneten Hohlraum. Dazu ist der Kippbalken derart ausgebildet und mit den übrigen Elementen der Aufhängungsvorrichtung verbunden, dass er sowohl im Wesentlichen parallel zu der Gewindestange als auch senkrecht dazu anordenbar ist. Im ersten Fall kann die Gewindestange mit dem daran angeordneten Kippbalken durch die Öffnung einem Deckenelement geführt werden. Durch ein anschließendes Schwenken des Kippbalkens um eine Symmetrieachse des Gewindeeinsatzes, sodass der Kippbalken im Wesentlichen senkrecht zu der Gewindestange steht, wird erreicht, dass der Kippbalken die Aufhängevorrichtung in dem Hohlraum arretiert und nicht mehr ohne weiteres zurück durch die Öffnung gezogen werden kann.

Die Aufhängevorrichtung hat den Vorteil, dass sie technisch sehr leicht zu handhaben ist und eine sehr unauffällige, ästhetische Befestigung einer Hängeleuchte an einem vor einem Hohlraum angeordneten Deckenelement ermöglicht. Derartige Deckenelemente sind verbreitet, weil abgehängte Decken eine sehr flexible Kabelführung und darüber hinaus auch die Anordnung beispielsweise von Transformatoren in dem Hohlraum ermöglichen. Zudem ermöglichen sie die flexible Aufhängung mehrerer Hängeleuchten in einem Ensemble und eine entsprechende versteckte Kabelführung.

Die Aufhängevorrichtung ist im montierten Zustand typischerweise praktisch unsichtbar. Von unten ist beispielsweise lediglich ein Ende der in der Öffnung in dem Deckenelement angeordneten Gewindestange sichtbar.

Der Balken weist zumindest zwei einander gegenüberliegende, starr miteinander verbundene Seitenwände auf, die sich parallel zur Balkenlängsachse erstrecken, wobei jede Seitenwand eine Ausnehmung zur Aufnahme des Gewindeeinsatzes aufweist. Dabei wird unter einer Erstreckung parallel zur Balkenlängsachse eine Erstreckung im Wesentlichen parallel zur Balkenlängsachse verstanden.

Dabei wird die starre Verbindung der Seitenwände durch einen Steg erzielt.. Die beiden Seitenwände sind miteinander durch einen Steg verbunden, der sich in Richtung der Balkenlängsachse auf einer ersten Seite der Ausnehmung parallel zur Balkenlängsachse erstreckt, wobei zwischen den Seitenwänden und dem Steg ein Raum aufgespannt ist, der zur Aufnahme der Gewindestange ausgebildet ist.

Dabei sind die Seitenwände nur auf der ersten Seite der Ausnehmung durch einen Steg verbunden. Auf einer zweiten Seite der Ausnehmung wird der zur Aufnahme der Gewindestange vorgesehene Raum nur durch die beiden einander gegenüberliegenden Seitenwände begrenzt.

Diese Ausgestaltung hat den Vorteil, dass der Kippbalken auf besonders einfache Weise in eine Position gebracht werden kann, in der er im wesentlichen parallel zu der Gewindestange bzw. im wesentlichen koaxial zu dieser angeordnet ist. In dieser Stellung des Kippbalkens ist die Aufhängevorrichtung durch eine Öffnung führbar. Zudem ist die Aufhängevorrichtung besonders einfach handhabbar und robust ausgebildet.

Gemäß einer Ausführungsform erstreckt sich der Steg ausgehend von der Ausnehmung bis zu einem ersten Ende der Seitenwände und ist an seinem von der Ausnehmung entfernten Ende in Richtung des zur Aufnahme der Gewindestange vorgesehenen Raums gekrümmt ausgebildet.

Durch die Erstreckung des Stegs ausgehend von der Ausnehmung bis zu einem ersten Ende der Seitenwände wird eine besonders stabile, starre Verbindung der Seitenwände miteinander erreicht. Durch die gekrümmte Ausbildung des Stegs an seinem von der Ausnehmung entfernten Ende wird erreicht, dass die Aufhängevorrichtung bei Bedarf durch die Öffnung in dem Deckenelement rückholbar ist. Dazu wird die gesamte Aufhängevorrichtung angehoben und der Kippbalken fällt aus seiner in der Montageposition waagerechten Stellung herunter, sodass
das erste Ende der Seitenwände nach unten auf die Öffnung in dem Deckenelement zeigt. Durch die Krümmung des Stegs auf die Gewindestange zu wird erreicht, dass der Steg beim anschließenden Zurückführen der Aufhängevorrichtung durch die Öffnung gegen die Gewindestange gedrückt wird und sich nicht in der Öffnung verkeilt.

Gemäß einer Ausführungsform ist der Gewindeeinsatz zylindrisch ausgebildet und die Durchgangsöffnung erstreckt sich quer zur Symmetrieachse des Gewindeeinsatzes.

Die Aufhängevorrichtung kann ferner eine Abdeckscheibe aufweisen, die an einem ersten Ende der Gewindestange anordenbar ist und die eine Durchgangsöffnung zur Durchführung eines Kabels der Hängeleuchte aufweist.

Dabei kann die Abdeckscheibe insbesondere derart ausgebildet sein, dass die Durchgangsöffnung groß genug für die Aufnahme der Gewindestange ist. Die Durchgangsöffnung kann auch ein Innengewinde aufweisen, in das die Gewindestange einschraubbar ist. In diesem Fall kann die Abdeckscheibe auf das erste Ende der Gewindestange geschraubt werden. Alternativ könnte die Abdeckscheibe auch auf andere Weise an dem ersten Ende der Gewindestange befestigt werden. Insbesondere ist es auch möglich, die Abdeckscheibe derart mit der Gewindestange zu verbinden, dass die Stirnseite der Gewindestange von unten nicht in der Durchgangsöffnung der Abdeckscheibe sichtbar ist.

Die Abdeckscheibe hat den Vorteil, dass sie eine saubere und ästhetische Abdeckung der Öffnung in dem Deckenelement erlaubt. Ist die Aufhängevorrichtung montiert, so ist von unten lediglich die Abdeckscheibe und gegebenenfalls die Stirnseite der in der Durchgangsöffnung der Abdeckscheibe angeordneten Gewindestange erkennbar.

Die Abdeckscheibe kann einstückig mit der Gewindestange ausgeführt werden. Typischerweise ist es jedoch kostengünstiger und flexibler, für die Gewindestange ein Standardteil beispielsweise aus Messing oder Stahl zu verwenden und die Abdeckscheibe unabhängig davon nach optischen Gesichtspunkten zu gestalten. Die Abdeckscheibe kann beschichtet, eloxiert, mattiert oder lackiert und aus einer Vielzahl von Materialien, typischerweise Metallen, ausgeführt sein. Sie kann auf die Gewindestange aufgeschraubt, aufgeschrumpft, geklemmt oder auf andere Weise lösbar oder unlösbar mit der Gewindestange verbunden sein.

Insbesondere kann die Abdeckscheibe aus Aluminium, Messing oder Stahl ausgeführt sein, wobei die Oberflächen dieser Materialien durch Eloxieren, Brünieren bzw. Schwärzen optisch den jeweiligen Anforderungen angepasst werden können. Dabei ist vorteilhaft, wenn die Abdeckscheibe nicht fest mit der Gewindestange verbunden ist, so dass die nach außen sichtbare Abdeckscheibe zu den jeweiligen Kundenwünschen passend ausgewählt werden kann."

Im montierten Zustand der Aufhängevorrichtung ist das Deckenelement vorteilhafterweise zwischen dem Kippbalken und der Abdeckscheibe geklemmt, so dass die Gewindestange in einer senkrechten Position fixiert wird.

Die Aufhängevorrichtung kann ferner ein Arretierelement an einem zweiten Ende der Gewindestange aufweisen, mittels dessen ein Kabel der Hängeleuchte zumindest in einer Bewegungsrichtung relativ zu der Gewindestange fixierbar ist. Ein derartiges Arretierelement kann eine Kabelklemme oder ein Kabelbinder sein. Das Arretierelement ist an dem zweiten Ende der Gewindestange an dem Kabel anbringbar und verhindert ein Hindurchrutschen des Kabels durch die Gewindestange. Dadurch wird eine mechanische Fixierung der Hängeleuchte in der gewünschten Höhe erreicht, die bei Bedarf durch ein Lösen des Arretierelements, seine Verschiebung und anschließende erneute Fixierung nachträglich veränderbar ist.

Ausführungsformen der Erfindung werden im Folgenden anhand von schematischen Figuren näher erläutert. Darin zeigen
- Figur 1: eine perspektivische Ansicht einer Aufhängevorrichtung gemäß einer Ausführungsform der Erfindung in einer ersten Stellung;
- Figur 2: eine perspektivische Ansicht der Aufhängevorrichtung gemäß Figur 1 in einer zweiten Stellung;
- Figur 3: eine Querschnittsdarstellung der Aufhängevorrichtung gemäß Figur 1 in der ersten Stellung;
- Figur 4: einen Ausschnitt aus einer Aufhängevorrichtung gemäß einer weiteren Ausführungsform der Erfindung und
- Figur 5: einen Ausschnitt aus einer Aufhängevorrichtung gemäß einer weiteren Ausführungsform der Erfindung.

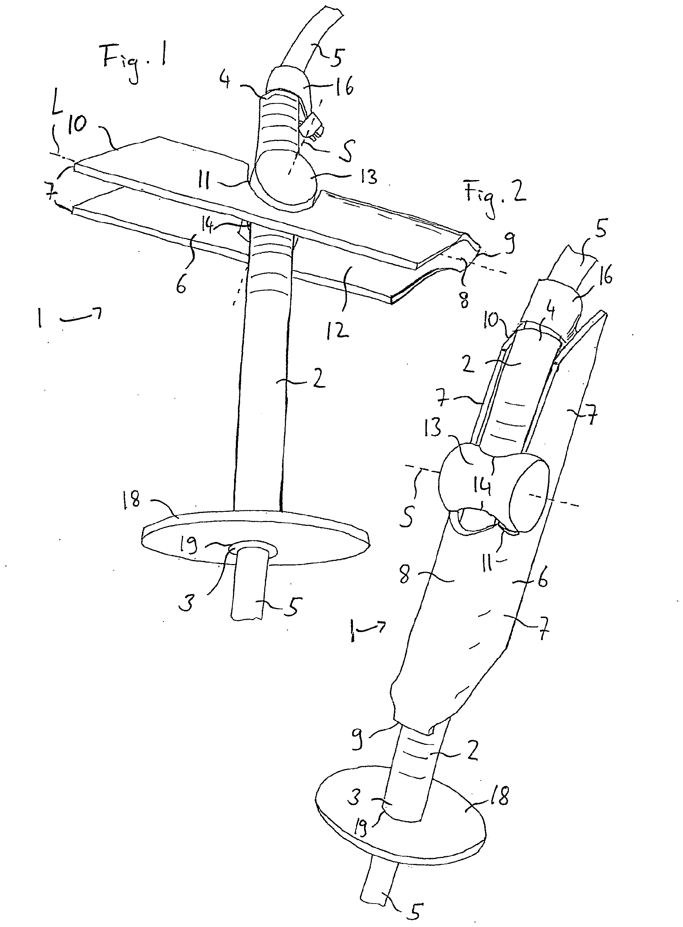

Die Figuren 1 und 2 zeigen eine Aufhängevorrichtung 1 gemäß einer Ausführungsform der Erfindung. In Figur 1 ist die Aufhängevorrichtung 1 in einer ersten Stellung gezeigt, in der sie an einer in den Figuren 1 und 2 nicht gezeigten Öffnung in einem Deckenelement arretiert ist. In Figur 2 ist die Aufhängevorrichtung 1 in einer zweiten Stellung gezeigt, in der sie zur Montage oder Demontage durch die Öffnung in dem Deckenelement geführt werden kann.

Die Aufhängevorrichtung 1 umfasst eine hohl ausgebildete Gewindestange 2 mit einem Außengewinde und einem ersten Ende 3 sowie einem zweiten Ende 4. Im montierten Zustand der Aufhängevorrichtung 1 erstreckt sich die Gewindestange durch eine Öffnung in einem Deckenelement. Durch die Gewindestange 2 ist ein Kabel 5 einer Hängeleuchte führbar. Bei dem Kabel 5 kann es sich insbesondere um ein Textilkabel oder ein drahtummanteltes Kabel handeln, jedoch auch um ein Kunststoffkabel ohne Ummantelung.

Die Aufhängevorrichtung 1 weist ferner einen Kippbalken 6 auf. Der Kippbalken 6 gliedert sich in 2 im Wesentlichen parallel zueinander verlaufende, trapezförmige Seitenwände 7 sowie einen Steg 8. Der Kippbalken 6 weist eine Balkenlängsachse L auf. In den Seitenwänden 7 ist jeweils eine Ausnehmung 11 angeordnet. Die Ausnehmung 11 ist typischerweise halbkreisförmig.

Der Steg 8 erstreckt sich auf einer Seite der Ausnehmung 11 von der Ausnehmung 11 bis zu einem ersten Ende 9 des Kippbalkens 6 und ist an dem ersten Ende 9 auf den von dem Kippbalken 6 aufgespannten Raum 12 hin gekrümmt. Der Raum 12 dient der Aufnahme der Gewindestange 2 in der in Figur 2 gezeigten Stellung der Aufhängevorrichtung 1.

In der Ausnehmung 11 ist ein Gewindeeinsatz 13 angeordnet. Der Gewindeeinsatz 13 ist zylindrisch ausgebildet mit einer Symmetrieachse S. Abhängig von der Form der Ausnehmung 11 kann der Gewindeeinsatz 13 nur durch eine Verschiebung in Richtung seiner Symmetrieachse S in die Ausnehmung 11 eingesetzt werden.

Der Gewindeeinsatz 13 weist eine Durchgangsöffnung für 10 auf, die sich senkrecht zu der Symmetrieachse S durch den Gewindeeinsatz 13 erstreckt und die ein Innengewinde aufweist, in das das Außengewinde der Gewindestange 2 eingreift. Die Gewindestange 2 kann somit in den Gewindeeinsatz 13 eingeschraubt werden. Am zweiten Ende 4 weist die Gewindestange 2 eine Unterbrechung des Gewindes oder eine andere Vorrichtung auf, die ein vollständiges Herausschrauben der Gewindestange 2 aus dem Gewindeeinsatz 13 blockiert.

Die Aufhängevorrichtung 1 weist ferner am zweiten Ende 4 der Gewindestange 2 ein Arretierelement 16 auf, das in der gezeigten Ausführungsform als Kabelklemme ausgebildet ist. Das Arretierelement 16 verhindert ein Durchrutschen des Kabels 5 durch die Gewindestange 2 und fixiert somit das Kabel 5 gegenüber der Gewindestange 2 zumindest in einer Richtung.

In der in Figur 1 gezeigten ersten Stellung der Aufhängevorrichtung 1 ist die Balkenlängsachse L des Kippbalkens 6 im Wesentlichen senkrecht zur Längsachse der Gewindestange 2 ausgerichtet.

In der in Figur 2 gezeigten zweiten Stellung der Aufhängevorrichtung 1 ist die Balkenlängsachse im Wesentlichen parallel zu der Gewindestange 3 ausgerechnet und die Gewindestange 2 ist in dem Raum 12 zwischen den Seitenwänden 7 und dem Steg 8 aufgenommen. In dieser "eingeklappten" zweiten Stellung kann die Aufhängevorrichtung durch die Öffnung in dem Deckenelement geführt werden.

Zur Überführung der Aufhängevorrichtung 1 von der ersten Stellung in die zweite Stellung und umgekehrt wird der Kippbalken 6 um die Symmetrieachse S des Gewindeeinsatzes 13 verschwenkt.

Die Aufhängevorrichtung 1 weist ferner eine Abdeckscheibe 18 am ersten Ende der Gewindestange 3 auf. Die Abdeckscheibe 18 weist eine zentrale Durchgangsöffnung 19 mit einem Innengewinde auf, sodass sie auf das erste Ende 3 der Gewindestange 2 aufgeschraubt werden kann.

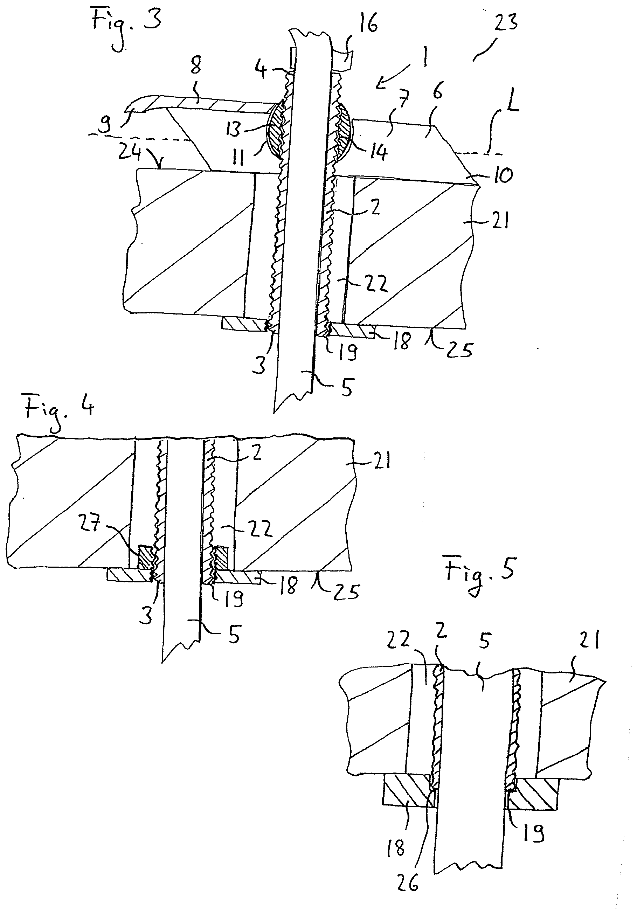

Figur 3 zeigt eine Querschnittsansicht der Aufhängevorrichtung 1 im montierten Zustand. In diesem Zustand ist die Aufhängevorrichtung 1 in einer Öffnung 22 in einem Deckenelement 21 angeordnet, wobei das Deckenelement 21 vor einem Hohlraum 23 angeordnet ist.

Im montierten Zustand kommt die Gewindestange 2 in der Öffnung 22 zu liegen und der Kippbalken 6 mit dem Gewindeeinsatz 13 liegt auf einer Oberseite 24 des Deckenelements in dem Hohlraum 23, in dem auch das Kabel 5 weitergeführt ist. Auf einer Unterseite 25 des Deckenelements 21 kommt die Abdeckscheibe 18 zur Anlage. In dem montierten Zustand verdeckt die Abdeckscheibe 18 den Rand der Öffnung 22.

Zur Montage einer Hängeleuchte mithilfe der Aufhängevorrichtung 1 an einem Deckenelement 21 wird folgendermaßen vorgegangen: zunächst wird das Kabel 5 durch die Gewindestange 2 geführt und an der gewünschten Stelle, die einer definierten Hängehöhe der Hängeleuchte entspricht, mittels dem Arretierelement 16 fixiert.

Anschließend wird die Aufhängevorrichtung 1 in die in der Figur 2 gezeigte zweite Stellung überführt und kann in dieser Stellung durch die Öffnung 22 in dem Deckenelement 21 geführt werden. Wenn die Aufhängevorrichtung 1 weit genug nach oben geführt wurde, so dass der Kippbalken 6 auch mit seinem ersten Ende 9 in dem Hohlraum 23 liegt, kann die Gewindestange in leichter Schräglage gehalten und das gekrümmte erste Ende 9 des Kippbalkens so auf die Oberseite 24 des Deckenelements 21 aufgestoßen werden, dass der Kippbalken 6 in die Waagerechte aufklappt und die in Figur 1 gezeigte erste Stellung erreicht ist. Die Aufhängevorrichtung 1 kann nun losgelassen werden und fällt unter dem Einfluss der Schwerkraft in die in Figur 3 gezeigte Stellung, in der der Kippbalken 6 auf der Oberseite 24 des Deckenelements 21 aufliegt. Zur Fixierung in der gewünschten Höhe wird die Gewindestange 2 nun noch so weit durch den Gewindeeinsatz 13 geschraubt, bis das Deckenelement 21 zwischen der Abdeckscheibe 18 und dem Kippbalken 6 geklemmt ist. Damit ist die Aufhängevorrichtung 1 an dem Deckenelement 21 montiert.

Zur Demontage kann folgendermaßen vorgegangen werden: durch Herausschrauben der Gewindestange 2 aus dem Gewindeeinsatz 13 wird ein Anheben der Aufhängevorrichtung 1 ermöglicht. Dadurch fällt der Kippbalken 6 unter dem Einfluss der Schwerkraft in seine in Figur 2 gezeigte zweite Stellung, wobei das erste Ende 9 des Kippbalkens 6 nach unten auf die Öffnung 22 zeigt. An diesem Ende ist der Steg 8 derart gekrümmt, dass er in der zweiten Stellung auf die Gewindestange 2 zeigt und sich bei einer Bewegung der Aufhängevorrichtung 1 nach unten nicht in der Öffnung 22 verkantet. Somit kann die Aufhängevorrichtung 1 in der in Figur 2 gezeigten Stellung wieder durch die Öffnung 22 nach unten entfernt werden.

Gängige Maße für die Elemente der Aufhängevorrichtung 1 sind 10 mm für den Durchmesser der Gewindestange 2 bei einem Durchmesser der Öffnung 22 von 20 bis 22 mm und einem Durchmesser der Abdeckscheibe 18 von ca. 30 mm.

Figur 4 zeigt eine Aufhängevorrichtung 1 gemäß einer weiteren Ausführungsform, die sich von der vorher gezeigten nur darin unterscheidet, dass oberhalb der Abdeckscheibe 18 eine Kontermutter 27 auf den Gewindeeinsatz 2 geschraubt ist, die die Abdeckscheibe 18 zusätzlich sichert.

Figur 5 zeigt eine Aufhängevorrichtung 1 gemäß einer weiteren Ausführungsform, die sich von der in den Figuren 1 bis 3 gezeigten darin unterscheidet, dass die Abdeckscheibe 18 einen Absatz 26 aufweist, auf dem die Gewindestange 2 aufsetzt. Unterhalb des Absatzes 26 ist der Durchmesser der Durchgangsöffnung 19 in der Abdeckscheibe 18 verringert, so dass von unten die Gewindestange 2 nicht in der Durchgangsöffnung 19 der Abdeckscheibe erkennbar ist. Somit ist die Gewindestange 2 vollständig durch die Abdeckscheibe 18 verdeckt.

## Patentansprüche

1. Aufhängevorrichtung (1) zur Deckenbefestigung einer Hängeleuchte an einem vor einem Hohlraum (23) angeordneten Deckenelement (21), wobei die Aufhängevorrichtung (1) folgendes aufweist:
- eine Gewindestange (2) mit einem Außengewinde, die durch eine Öffnung (22) in dem Deckenelement (21) führbar ist, wobei die Gewindestange (2) zur Aufnahme eines Kabels (5) der Hängeleuchte hohl ausgebildet ist;
- einen Kippbalken (6) mit einer Balkenlängsachse und einer quer zur Balkenlängsachse verlaufenden Ausnehmung (11);
- einen Gewindeeinsatz (13) mit einer Durchgangsöffnung (14) mit einem Innengewinde, wobei der Gewindeeinsatz (13) zur Aufnahme der Gewindestange (2) ausgebildet ist und derart in die Ausnehmung (11) des Kippbalkens (6) einsetzbar ist, dass der Kippbalken (6) um eine Symmetrieachse des Gewindeeinsatzes (13) schwenkbar ist,
wobei
- der Kippbalken (6) zumindest zwei einander gegenüberliegende, starr miteinander verbundene Seitenwände (7) aufweist, die sich parallel zur Balkenlängsachse erstrecken, wobei jede Seitenwand (7) eine Ausnehmung (11) zur Aufnahme des Gewindeeinsatzes (13) aufweist,
- die beiden Seitenwände (7) miteinander durch einen Steg (8) verbunden sind, der sich in Richtung der Balkenlängsachse auf einer ersten Seite der Ausnehmung (11) parallel zur Balkenlängsachse erstreckt, wobei zwischen den Seitenwänden (7) und dem Steg (8) ein Raum (12) aufgespannt ist, der zur Aufnahme der Gewindestange (2) ausgebildet ist,
- die Seitenwände (7) nur auf der ersten Seite der Ausnehmung (11) durch einen Steg (8) verbunden sind und auf einer zweiten Seite der Ausnehmung (11) der zur Aufnahme der Gewindestange (2) vorgesehene Raum (12) nur durch die beiden einander gegenüber liegenden Seitenwände (7) begrenzt wird und
- der Kippbalken (6) eine erste Stellung aufweist, in der er im Wesentlichen senkrecht zur Gewindestange (2) angeordnet ist, und eine zweite Stellung, in der er im Wesentlichen parallel zur Gewindestange (2) angeordnet ist, wobei der Kippbalken (6) unter dem Einfluss der Schwerkraft aus der ersten Stellung in die zweite Stellung schwenkbar ist.

2. Aufhängevorrichtung (1) nach Anspruch 1,
wobei sich der Steg (8) ausgehend von der Ausnehmung (11) bis zu einem ersten Ende (9) der Seitenwände (7) erstreckt und an seinem von der Ausnehmung (11) entfernten Ende in Richtung des zur Aufnahme der Gewindestange (2) vorgesehenen Raums (12) gekrümmt ausgebildet ist.

3. Aufhängevorrichtung (1) nach Anspruch 1 oder 2,
wobei der Gewindeeinsatz (13) zylindrisch ausgebildet ist und sich die Durchgangsöffnung (14) quer zur Symmetrieachse des Gewindeeinsatzes (13) erstreckt.

4. Aufhängevorrichtung (1) nach einem der Ansprüche 1 bis 3,
die ferner eine Abdeckscheibe (18) aufweist, die an einem ersten Ende (3) der Gewindestange (2) anordenbar ist und die eine Durchgangsöffnung (19) zur Durchführung eines Kabels (5) der Hängeleuchte aufweist.

5. Aufhängevorrichtung (1) nach einem der Ansprüche 1 bis 4,
die ferner ein Arretierelement (16) an einem zweiten Ende (4) der Gewindestange (2) aufweist, mittels dessen ein Kabel (5) der Hängeleuchte zumindest in einer Bewegungsrichtung relativ zu der Gewindestange (2) fixierbar ist.

## Claims

1. Suspension device (1) for a ceiling fitting of a hanging light fixture on a ceiling element (21) disposed in front of a void (23), wherein the suspension device (1) has the following:
- a threaded rod (2) with an outer threading which can be guided through an opening (22) in the ceiling element (21), wherein the threaded rod (2) is designed hollow to receive a cable (5) of the hanging light fixture;
- a tilting beam (6) with a beam longitudinal axis and a recess (11) extending transversely to the beam longitudinal axis;
- a thread insert (13) with a through opening (14) with an inner threading, wherein the threaded insert (13) is designed for the reception of the threaded rod (2) and can be set into the recess (11) of the tilting beam (6) such that the tilting beam (6) can be pivoted about a symmetry axis of the threaded insert (13),
wherein
- the tilting beam (6) has at least two oppositely situated side walls (7), connected rigidly with one another, which extend parallel to the beam longitudinal axis, wherein each side wall (7) has a recess (11) for the reception of the threaded insert (13),
- the two side walls (7) are connected with one another by a web (8) which extends in the direction of the beam longitudinal axis on a first side of the recess (11) parallel to the beam longitudinal axis, wherein between the side walls (7) and the web (8) is spanned a space (12), which is formed for the reception of the threaded rod (2),
- the side walls (7) are connected by a web (8) only on the first side of the recess (11) and on a second side of the recess (11) the space (12) provided for the reception of the threaded rod (2) is delimited only by the two side walls (7) situated opposite one another and
- the tilting beam (6) has a first position in which it is disposed substantially perpendicularly to the threaded rod (2) and a second position, in which it is disposed substantially parallel to the threaded rod (2), wherein the tilting beam (6) can be pivoted out of the first position into the second position under the influence of gravity.

2. Suspension device (1) according to claim 1,
wherein the web (8) starting from the recess (11) extends up to a first end (9) of the side walls (7) and is formed curved at its end, distanced from the recess (11), in the direction of the space (12) provided for the reception of the threaded rod (2).

3. Suspension device (1) according to claim 1 or 2,
wherein the thread insert (13) is formed cylindrically and the through opening (14) extends transversely to the symmetry axis of the thread insert (13).

4. Suspension device (1) according to any of claims 1 to 3,
which furthermore has a cover disc (18), which can be disposed on a first end (3) of the threaded rod (2) and which has a through opening (19) for guiding-through a cable (5) of the hanging light fixture.

5. Suspension device (1) according to any of claims 1 to 4,
which further has a locking element (16) on a second end (4) of the threaded rod (2), by means of which a cable (5) of the hanging light fixture can be fixed at least in one movement direction in relation to the threaded rod (2).

## Revendications

1. Dispositif de suspension (1) pour la fixation au plafond d'un luminaire suspendu à un élément de plafond (21) agencé devant une cavité (23), dans lequel le dispositif de suspension (1) présente ce qui suit :
- une tige filetée (2) avec un filetage extérieur, qui peut être guidée par une ouverture (22) dans l'élément de plafond (21), dans lequel la tige filetée (2) est réalisée creuse pour la réception d'un câble (5) du luminaire suspendu ;
- une barre basculante (6) avec un axe longitudinal de barre et un évidement (11) s'étendant transversalement à l'axe longitudinal de barre ;
- un insert fileté (13) avec une ouverture traversante (14) avec un filetage intérieur, dans lequel l'insert fileté (13) est réalisé pour la réception de la tige filetée (2) et peut être inséré dans l'évidement (11) de la barre basculante (6) de sorte que la barre basculante (6) peut pivoter autour d'un axe de symétrie de l'insert fileté (13) ;
dans lequel
- la barre basculante (6) présente au moins deux parois latérales (7) se faisant face, reliées l'une à l'autre de manière rigide, qui s'étendent parallèlement à l'axe longitudinal de barre, dans lequel chaque paroi latérale (7) présente un évidement (11) pour la réception de l'insert fileté (13),
- les deux parois latérales (7) sont reliées l'une à l'autre par un pont (8), qui s'étend en direction de l'axe longitudinal de barre sur un premier côté de l'évidement (11) parallèlement à l'axe longitudinal de barre, dans lequel un espace (12) est défini entre les parois latérales (7) et le pont (8), qui est réalisé pour la réception de la tige filetée (2),
- les parois latérales (7) sont reliées seulement sur le premier côté de l'évidement (11) par un pont (8) et l'espace (12) prévu pour la réception de la tige filetée (2) est limité sur un deuxième côté de l'évidement (11) seulement par les deux parois latérales (7) se faisant face et
- la barre basculante (6) présente une première position, dans laquelle elle est agencée sensiblement perpendiculairement à la tige filetée (2), et une deuxième position, dans laquelle elle est agencée sensiblement parallèlement à la tige filetée (2), dans lequel la barre basculante (6) peut pivoter sous l'effet de la gravité de la première position à la deuxième position.

2. Dispositif de suspension (1) selon la revendication 1,
dans lequel le pont (8) s'étend de l'évidement (11) jusqu'à une première extrémité (9) des parois latérales (7) et est réalisé incurvé au niveau de son extrémité éloignée de l'évidement (11) en direction de l'espace (12) prévu pour la réception de la tige filetée (2).

3. Dispositif de suspension (1) selon la revendication 1 ou 2,
dans lequel l'insert fileté (13) est réalisé de manière cylindrique et l'ouverture traversante (14) s'étend transversalement à l'axe de symétrie de l'insert fileté (13).

4. Dispositif de suspension (1) selon l'une quelconque des revendications 1 à 3,
qui présente en outre un disque de recouvrement (18), qui peut être agencé au niveau d'une première extrémité (3) de la tige filetée (2) et qui présente une ouverture traversante (19) pour le passage d'un câble (5) du luminaire suspendu.

5. Dispositif de suspension (1) selon l'une quelconque des revendications 1 à 4,
qui présente en outre un élément d'arrêt (16) au niveau d'une deuxième extrémité (4) de la tige filetée (2), au moyen duquel un câble (5) du luminaire suspendu peut être fixé au moins dans une direction de déplacement par rapport à la tige filetée (2).
